(19) Europäisches Patentamt European Patent Office Office européen des brevets

(11) **EP 4 579 599 A1**

(12) **EUROPEAN PATENT APPLICATION**
published in accordance with Art. 153(4) EPC

(43) Date of publication:
**02.07.2025 Bulletin 2025/27**

(21) Application number: **24777541.4**

(22) Date of filing: **07.02.2024**

(51) International Patent Classification (IPC):
***G06T 13/40*** *(2011.01)*

(52) Cooperative Patent Classification (CPC):
Y02T 10/40

(86) International application number:
**PCT/CN2024/076583**

(87) International publication number:
**WO 2024/198747 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.03.2023 CN 202310318727**

(71) Applicant: **Tencent Technology (Shenzhen) Company Limited**
**Shenzhen, Guangdong 518057 (CN)**

(72) Inventors:
• **CHENG, Qingrong**
**Shenzhen, Guangdong 518057 (CN)**

• **ZHANG, Baocheng**
**Shenzhen, Guangdong 518057 (CN)**
• **LI, Zhuo**
**Shenzhen, Guangdong 518057 (CN)**
• **GE, Wenhao**
**Shenzhen, Guangdong 518057 (CN)**
• **FU, Xinghui**
**Shenzhen, Guangdong 518057 (CN)**
• **SUN, Zhongqian**
**Shenzhen, Guangdong 518057 (CN)**

(74) Representative: **EP&C**
**P.O. Box 3241**
**2280 GE Rijswijk (NL)**

(54) **PROCESSING METHOD AND APPARATUS FOR MOTION CAPTURE DATA, AND DEVICE AND STORAGE MEDIUM**

(57)     A processing method for motion capture data, which method is performed by a computer device. The method comprises: performing motion capture analysis on an object in a video, so as to obtain first motion capture data, wherein the first motion capture data comprises global displacement data and bone rotation data of the subject in each video frame of the video, and the global displacement data represents the displacement of a representative bone node of the subject (301); analyzing a foot grounding state of the subject, so as to obtain foot grounding data of the subject in each video frame, wherein the foot grounding data represents a foot grounding mode of the subject (302); on the basis of the first motion capture data, determining a foot sinking-into-the-ground degree of the subject in each video frame, and determining a foot clipping loss of the subject in the video according to the foot sinking-into-the-ground degree (303); on the basis of the first motion capture data and the foot grounding data, determining a foot sliding degree of the subject in each video frame, and determining a foot gliding loss of the subject in the video according to the foot sliding degree (304); and performing iterative optimization on the first motion capture data on the basis of the foot sinking-into-the-ground loss and the foot gliding loss, so as to obtain second motion capture data of the object (305).

EP 4 579 599 A1

Perform motion capture analysis on at least one object in a video, to obtain initial motion capture data, the initial motion capture data including global displacement data and bone rotation data of the object in each video frame of the video, and the global displacement data representing a displacement of a representative bone node of the object ⌐301

Analyze a foot grounding state of the object, to obtain foot-ground-relation data of the object in each video frame, the foot-ground-relation data indicating a relation between each foot of the object and the ground ⌐302

Determine a foot-to-ground penetration degree of the object in each video frame based on the initial motion capture data, and determine a foot penetration-related loss of the object in the video according to the foot-to-ground penetration degree ⌐303

Determine a foot sliding degree of the object in each video frame based on the initial motion capture data and the foot grounding data, and determine a foot sliding-related loss of the object in the video according to the foot sliding degree ⌐304

Perform iterative optimization on the initial motion capture data based on the foot penetration-related loss and the foot sliding-related loss, to obtain corrected motion capture data of the object ⌐305

FIG. 3

**Description**

FIELD OF THE TECHNOLOGY

This application relates to the field of video motion capture technologies, and in particular, to motion capture data processing method and apparatus, a device, and a storage medium.

BACKGROUND OF THE DISCLOSURE

Human body motion capture technology enables direct acquisition of human motion, and its representation in the digital format. This allows for applications to other fields. Among motion data acquisition methods, video motion capture technology is the most cost-effective and has wide application prospects.

However, due to a significant semantic gap between planar motion data and three-dimensional motion data in a video, motion data is generally flawed, with problems such as foot penetration and foot sliding. In the related art, these problems are primarily addressed through post-processing corrections by an animator, who manually fix problems like foot penetration and foot sliding in motion data. This process is time-consuming and costly.

SUMMARY

Embodiments of this disclosure provide a motion capture data processing method and apparatus, a device, and a storage medium.

In an aspect, the embodiments of this disclosure provide a motion capture data processing method, which is performed by a computer device. The method includes:

performing motion capture analysis on at least one object in a video, to obtain initial motion capture data, wherein the object has at least one foot, the initial otion capture data includes global displacement data and bone rotation data of the object in each video frame of the video, and the global displacement data represents displacement data of bone nodes of the object;

obtaining foot-ground-relation data of the object in each video frame based on the initial motion capture data, wherein the foot-ground-relation data indicates a relation between each foot of the object and ground;

determining a first relationship in a vertical direction between each of the at least one foot of the object and the ground in each video frame based on the initial motion capture data and the foot-ground-relation data, and determining a foot penetration-related loss of the object in the video according to the first relationship, wherein the foot penetration-related loss indicates an image error caused by the at least one foot penetrating into the ground ;

determining a second relationship in at least one horizontal direction between each foot of the object and the ground in each video frame based on the initial motion capture data and the foot-ground-relation data, and determining a foot sliding-related loss of the object in the video according to the second relationship, wherein the foot sliding-related loss indicates an image error caused by the at least one foot sliding on the ground ; and

performing iterative optimization on the first motion capture data based on the foot penetration-related loss and the foot sliding-related loss, to obtain corrected motion capture data of the object.

In another aspect, the embodiments of this disclosure provide a motion capture data processing apparatus, which includes:

a first analysis module, configured to perform motion capture analysis on at least one object in a video, to obtain initial motion capture data, wherein the object has at least one foot, the first motion capture data includes global displacement data and bone rotation data of the object in each video frame of the video, and the global displacement data represents displacement data of bone nodes of the object;

a second analysis module is further configured to obtain foot-ground-relation data of the object in each video frame based on the initial motion capture data, wherein the foot-ground-relation data indicates a relation between each foot of the object and ground;

a loss determining module, configured to determine a first relationship in a vertical direction between each of the at least one foot of the object and the ground in each video frame based on the initial motion capture data, and determine a foot penetration-related loss of the object in the video according to the first relationship, wherein the foot penetration-related loss indicates an image error caused by the at least one foot penetrating into the ground; and determine a second relationship in at least one horizontal direction between each foot of the object and the ground in each video frame based on the first motion capture data and the foot-ground-relation data, and determine a foot sliding-related loss of the object in the video according to the second relationship, wherein the foot sliding-related loss indicates an image error caused by the at least one foot sliding on the ground; and

an optimization module, configured to perform iterative optimization on the initial motion capture data based on the foot penetration-related loss and the foot sliding-related loss, to obtain corrected motion capture data of the object.

In another aspect, the embodiments of this disclosure provide a computer device, which includes a processor and a memory. The memory has at least one instruction stored therein, and the processor loads and executes the at least one instruction to implement the motion capture data processing method described in the foregoing aspect.

In another aspect, the embodiments of this disclosure provide a computer-readable storage medium, which has at least one instruction stored therein. A processor loads and executes the at least one instruction to implement the motion capture data processing method described in the foregoing aspect.

In another aspect, the embodiments of this disclosure provide a computer program product, which includes computer instructions. The computer instructions are stored in a computer-readable storage medium. A processor of a computer device reads the computer instructions from the computer-readable storage medium, and executes the computer instructions, to cause the computer device to perform the motion capture data processing method described in the foregoing aspects.

Details of one or more embodiments of this disclosure are described in the accompanying drawings and the descriptions below. Other features, objectives, and advantages of this disclosure become apparent from the description, the accompanying drawings, and the claims.

BRIEF DESCRIPTION OF THE DRAWINGS

To describe the technical solutions in the embodiments of this disclosure or the related art more clearly, the following briefly describes the accompanying drawings required for use in the description of the embodiments or the related art. Apparently, the accompanying drawings in the following descriptions show merely some embodiments of this disclosure, and those of ordinary skill in the art may still derive other drawings from these accompanying drawings without creative efforts.

FIG. 1 is a block diagram of processing of motion capture data according to an exemplary embodiment of this disclosure.

FIG. 2 is a schematic diagram of an implementation environment according to an exemplary embodiment of this disclosure.

FIG. 3 is a flowchart of a motion capture data processing method according to an exemplary embodiment of this disclosure.

FIG. 4 is a flowchart of a motion capture data processing method according to another exemplary embodiment of this disclosure.

FIG. 5 is a schematic structural diagram of determination of two-dimensional key point information by using a vision transformer (ViT) model according to an exemplary embodiment of this disclosure.

FIG. 6 is a schematic structural diagram of determination of a foot-ground-relation data by using temporal convolutional network (TCN) model according to an exemplary embodiment of this disclosure.

FIG. 7 is a schematic diagram of a temporal difference relationship between a second lateral axis component and a second longitudinal axis component for constructing global displacement data according to an exemplary embodiment of this disclosure.

FIG. 8 is a flowchart of staged iterative optimization according to an exemplary embodiment of this disclosure.

FIG. 9 is a flowchart of a motion capture data processing method according to still another exemplary embodiment of this disclosure.

FIG. 10 is a structural block diagram of a motion capture data processing apparatus according to an exemplary embodiment of this disclosure.

FIG. 11 is a schematic structural diagram of a computer device according to an exemplary embodiment of this disclosure.

DESCRIPTION OF EMBODIMENTS

The following clearly and completely describes the technical solutions in the embodiments of this disclosure with reference to the accompanying drawings in the embodiments of this disclosure. Apparently, the described embodiments are only some of rather than all of the embodiments of this disclosure. All other embodiments obtained by those of ordinary skill in the art based on the embodiments in this disclosure without creative efforts fall within the scope of protection of this disclosure.

Artificial intelligence (AI) is a theory, method, technology, and disclosure system that uses a digital computer or a machine controlled by the digital computer to simulate, extend, and expand human intelligence, perceive an environment, acquire knowledge, and use knowledge to obtain an optimal result. In other words, AI is a comprehensive technology in computer science and attempts to understand the essence of intelligence and produce a new intelligent machine that can react in a manner similar to human intelligence. AI is to study the design principles and implementation methods of various intelligent machines, to enable the machines to have the functions of perception, reasoning, and decision-making.

The AI technology is a comprehensive discipline, and relates to a wide range of fields including both hardware-level technologies and software-level technologies. The basic AI technologies generally include technologies such as a sensor, a dedicated AI chip, cloud computing, distributed storage, a big data processing technology, an operating/interaction system, and electromechanical integration. AI software technologies mainly include several major directions such as a computer vision technology, a speech processing technology, a natural language processing technology, and machine learning (ML)/deep learning.

ML is a multi-field inter-discipline, relates to a plurality of disciplines such as the probability theory, statistics, the approximation theory, convex analysis, and the algorithm complexity theory, specializes in studying how a computer simulates or implements a human learning behavior to acquire new knowledge or skills, and reorganize an existing knowledge structure, to keep improving its performance. ML is the core of AI, is a basic way to make the computer intelligent, and is applied to various fields of AI. ML and deep learning generally include technologies such as an artificial neural network, a belief network, reinforcement learning, transfer learning, inductive learning, and learning from demonstrations.

With research and progress of the AI technology, the AI technology is being researched and applied to multiple fields, such as common smart homes, smart wearable devices, virtual assistants, smart speakers, smart marketing, driverless cars, autonomous driving, unmanned aerial vehicles, robots, smart healthcare, and smart customer services. It is believed that with development of the technology, the AI technology is applied to more fields, and plays an increasingly important role.

In the related art, after video motion capture analysis is performed on a video to obtain initial motion capture data, an animation video is directly generated according to the initial motion capture data, and then an animator fixes problems like foot penetration and foot sliding in the animation video at a later stage. Consequently, the animator needs to consume long time and expenses, and costs are relatively high.

In embodiments of this disclosure, in addition to determining the initial motion capture data according to the video, foot-ground-relation data of an object in each video frame is determined according to the video. Then, a foot penetration-related loss and a foot sliding-related loss in the initial motion capture data are determined based on the initial motion capture data and the foot-ground-relation data, and iterative optimization is performed on the initial motion capture data according to the foot penetration-related loss and the foot sliding-related loss, to obtain corrected motion capture data. Data quality of the corrected motion capture data is higher than that of the initial motion capture data.

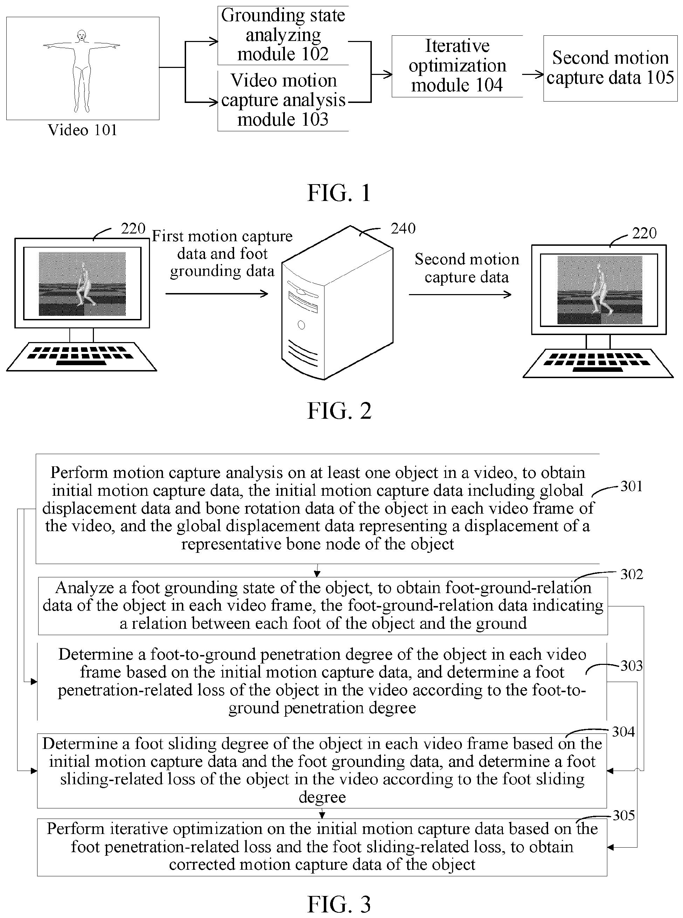

Schematically, as shown in FIG. 1, a computer device acquires a video 101, determines first, or initial, motion capture data by using a video motion capture analysis module 103, determines foot-ground-relation data of an object in each video frame by using a grounding state analyzing module 102, and then performs iterative optimization on the first motion capture data based on a foot penetration-related loss and a foot sliding-related loss by using an iterative optimization module 104, to obtain second, or corrected, motion capture data 105.

Solutions provided in the embodiments of this disclosure relate to technologies such as ML of AI are specifically described by using the following embodiments.

FIG. 2 is a schematic diagram of an implementation environment according to an exemplary embodiment of this disclosure. The implementation environment includes a terminal 220 and a server 240. The terminal 220 performs data communication with the server 240 through a communication network. In an embodiment, the communication network is a wired network or a wireless network, and the communication network is at least one of a local area network, a metropolitan area network, and a wide area network.

The terminal 220 is an electronic device on which an application program having a function of processing motion capture data is installed. The function of processing motion capture data may be a function of a native application in the terminal, or a function of a third-party application. The electronic device may be a smartphone, a tablet computer, a personal computer, a wearable device, an in-vehicle terminal, or the like. In FIG. 2, an example in which the terminal 220 is a personal computer is used for description, but the terminal is not limited thereto.

The server 240 may be an independent physical server, or may be a server cluster or a distributed system that is composed of a plurality of physical servers, or may be a cloud server that provides basic cloud computing services such as a cloud service, a cloud database, cloud computing, a cloud function, cloud storage, a network service, cloud communication, a middleware service, a domain name service, a security service, a content delivery network (CDN), and a big data and AI platform. In the embodiments of this disclosure, the server 240 is a backend server of an application having a function of processing motion capture data.

In a possible implementation, as shown in FIG. 2, the server 240 exchanges data with the terminal 220. After determining first motion capture data and foot-ground-relation data according to a video, the terminal 220 transmits the first motion capture data and the foot-ground-relation data to the server 240. Then, the server 240 determines a foot penetration-related loss and a foot sliding-related loss based on the first motion capture data and the foot-ground-relation data, performs iterative optimization on the first motion capture data according to the foot penetration-related loss and the foot sliding-related loss, to obtain second motion capture data, and transmits the second motion capture data to the terminal 220. Finally, the terminal 220 may generate an animation video according to the second motion capture data.

FIG. 3 is a flowchart of a motion capture data processing method according to an exemplary embodiment of this disclosure. In this embodiment, an example in which the method is performed by a computer device (including the terminal 220 and/or the server 240) is used for description, and the method includes the following operations:

Operation 301: Perform motion capture analysis on at least one object in a video, to obtain initial motion capture data, the initial motion capture data including global displacement data and bone rotation data of the object in each video frame of the video, and the global displacement data representing a displacement of a representative bone node of the object.

Each object is a movable object in the video. The object includes a torso and limb connected to the torso. The object has at least one foot. The limbs can rotate and bend relative to the torso. In this way, the object can perform a motion. Both the limbs and the torso have bones, and the bones of the limbs are connected to the bones of the torso via bone nodes. The limbs include lower limbs in contact with the ground, and may further include upper limbs. The lower limbs include legs connected to the torso and feet connected to the legs. The feet are in contact with the ground. The object may be a human body, a robot, or an animal. The first motion capture data is motion capture data that is obtained by performing motion capture analysis on the object. The first motion capture data includes the global displacement data and the bone rotation data of the object in each video frame. In the first motion capture data, a set of global displacement data and a set of bone rotation data correspond to each video frame. The global displacement data and the bone rotation data of each video frame in the first motion capture data may represent a motion change of the object.

In a possible implementation, the computer device performs video motion capture analysis on the object, to obtain the first motion capture data. In an embodiment, a method for performing video motion capture analysis is performing real-time motion collection and data analysis on the object, or directly performing motion capture data analysis on an offline video, which is not defined in the embodiments of this disclosure.

In an embodiment, the first motion capture data includes the global displacement data and the bone rotation data of the object in each video frame of the video. The global displacement data represents the displacement of the representative bone node of the object, and the represented displacement may specifically include whether the displacement is performed, a displacement direction, or a displacement distance. The representative bone node is a point representing a location of the object, and in some embodiments, is a central bone node of the object. The representative bone node or the central bone node may be a center of gravity of a human pelvic, or may be another bone node of the human body. The bone rotation data represents a motion rotation degree of each bone node of the object.

In a possible implementation, the computer device determines a fixed quantity of bone nodes corresponding to the object, and performs video motion capture analysis on the object in the video, to determine the global displacement data of the object based on a location of the representative bone node in each video frame; and to determine the bone rotation data of the object based on locations of the fixed quantity of bones nodes in each video frame. The fixed quantity may be determined based on a bone structure required for describing a motion of the object. The bone structure includes a quantity of required bones and a connection relationship of the required bones. For example, the fixed quantity is 24.

Operation 302: Analyze a state of each foot of the object relative to the ground, referred to as grounding state, to obtain foot-ground-relation data of the object in each video frame, the foot-ground-relation data representing a foot grounding manner of the object.

In a process of directly generating animation data according to the first motion capture data, due to a semantic gap between planar motion data and three-dimensional motion data in a video, obtained motion data is unavoidably vulnerable to defects such as a foot penetration problem and a foot sliding problem. Therefore, to optimize the first motion capture data and improve quality of the video motion capture data, the computer device may process a foot penetration problem and a sliding problem in the first motion capture data based on the foot-ground-relation data of the object.

In a possible implementation, the computer device analyzes the foot grounding state of the object based on the video, to obtain the foot-ground-relation data of the object in each video frame. The foot-ground-relation data represents the foot grounding manner of the object, i.e., the relation between each foot of the object and the ground. The relation between each foot and the ground may include any possible relation, for example, a spatial relation (e.g., a relative position of a foot against the ground, a distance between a foot and the ground), a motional relation (e.g., a relative movement of a foot against the ground), an interaction relation (e.g., an action of the foot towards the ground), a contact state (e.g., whether a foot touches the ground or not), etc. Through analysis of the foot grounding state of the object, a set of foot-ground-relation data corresponding to each video frame is obtained.

In an embodiment, the computer device selects four key points of the feet of the object, which are respectively a left tiptoe, a left heel, a right tiptoe, and a right heel, and then determines grounding manners of the four key points in each video frame, to obtain the foot-ground-relation data of the object. The foot grounding manner may be data indicating a relation of each key point of a foot of the object with the ground, and the relation may be any relation similar to those described above, e.g., data indicating a manner in which each key point of the feet is in contact with the ground, such as a set of data indicating that the left tiptoe is in contact with the ground, the left heel is not in contact with the ground, the right tiptoe penetrates through the ground, and the right heel is not in contact with the ground. The foot grounding manner may include data about whether the foot touches the ground, and may further include data about whether each key point of the feet is in contact with the ground.

Operation 303: Determine a foot-to-ground penetration degree of the object in each video frame based on the first motion capture data, and determine a foot penetration-related loss of the object in the video according to the foot-to-ground penetration degree. The foot-to-ground penetration degree indicates a relationship in a vertical direction between each of the at least one foot of the object and the ground. The foot penetration-related loss indicates an image error caused by the at least one foot penetrating into the ground.

Operation 304: Determine a foot sliding degree of the object in each video frame based on the first motion capture data and the foot-ground-relation data, and determine a foot sliding-related loss of the object in the video according to the foot sliding degree. The foot sliding degree indicates a relationship between each foot of the object and the ground in at least one horizontal direction. The foot sliding-related loss indicates an image error caused by the at least one foot sliding on the ground.

In this embodiment, the computer device determines the foot penetration-related loss and the foot sliding-related loss of the first motion capture data based on the first motion capture data and the foot-ground-relation data. The foot penetration-related loss represents the foot-to-ground penetration degree of the object in each video frame, and the foot sliding-related loss represents the foot sliding degree of the object when the foot is in contact with the ground. The foot-to-ground penetration degree represents a degree to which the foot of the object intrudes into the ground, and the foot sliding degree is a degree to which the foot of the object slides along the ground.

Foot penetration refers to a situation in which the foot intrudes into the ground. The foot penetration-related loss can represent whether the foot of the object intrudes into the ground in each video frame, and may further represent the degree to which the foot intrudes into the ground when the foot intrudes into the ground. Foot sliding refers to a displacement of the foot of the object relative to the ground due to an error in motion capture.

In a possible implementation, to reduce the foot penetration problem and the foot sliding problem in the first motion capture data, the computer device determines, according to the first motion capture data and the foot-ground-relation data, the foot penetration-related loss and the foot sliding-related loss corresponding to the first motion capture data.

The foot penetration-related loss represents the foot-to-ground penetration degree of the object in each video frame. In an embodiment, the computer device determines the foot penetration-related loss in each video frame according to degrees of four foot key points of the object intruding into the ground. The foot sliding-related loss represents the degree of a foot of the object sliding on the ground when the foot is in contact with the ground. In an embodiment, when the foot of the object is in contact with the ground, the computer device determines the foot sliding-related loss in the first motion capture data according to displacements of four foot key points between adjacent video frames.

Operation 305: Perform iterative optimization on the first motion capture data based on the foot penetration-related loss and the foot sliding-related loss, to obtain corrected motion capture data of the object.

Iterative optimization refers to performing fine adjustment on the first motion capture data, to reduce both the foot penetration-related loss and the foot sliding-related loss, which alleviates or removes conditions of foot penetration and foot sliding.

In a possible implementation, after determining the foot penetration-related loss and the foot sliding-related loss, the computer device performs iterative optimization on the first motion capture data, to obtain the second motion capture data of the object. The quality of the second motion capture data is higher than that of the first motion capture data, and a foot penetration problem and a foot sliding problem in the second motion capture data are obviously less than that in the first motion capture data.

In a possible implementation, the computer device first performs iterative optimization on the first motion capture data based on the foot penetration-related loss, to obtain optimized video motion capture data, and then performs iterative optimization on the optimized video motion capture data based on the foot sliding-related loss, to obtain the second motion capture data.

In conclusion, according to the embodiments of this disclosure, motion capture analysis is performed on the object in the video, to obtain the first motion capture data, and the foot grounding state of the object is analyzed according to the video, to obtain the foot-ground-relation data of the object in each video frame. Then, the computer device may determine the foot sliding-related loss and the foot penetration-related loss according to the first motion capture data and the foot-ground-relation data, and perform iterative optimization on the first motion capture data according to the foot sliding-related loss and the foot penetration-related loss, to obtain the second motion capture data. By adopting the solutions provided in the embodiments of this disclosure, the foot sliding problem and the foot penetration problem in the video motion capture data can be reduced, data quality of the video motion capture data is improved, and a repairing workload and repairing costs of post animation production are reduced.

In a possible implementation, to improve accuracy of optimizing the foot penetration problem and the foot sliding problem in the first motion capture data, the computer device first constructs a parameterized model of the object according to the first motion capture data, determines the global displacement data and coordinates of each foot bone node in a three-dimensional coordinate space according to the parameterized model, determines the foot penetration-related loss and the foot sliding-related loss, and performs iterative optimization on the first motion capture data.

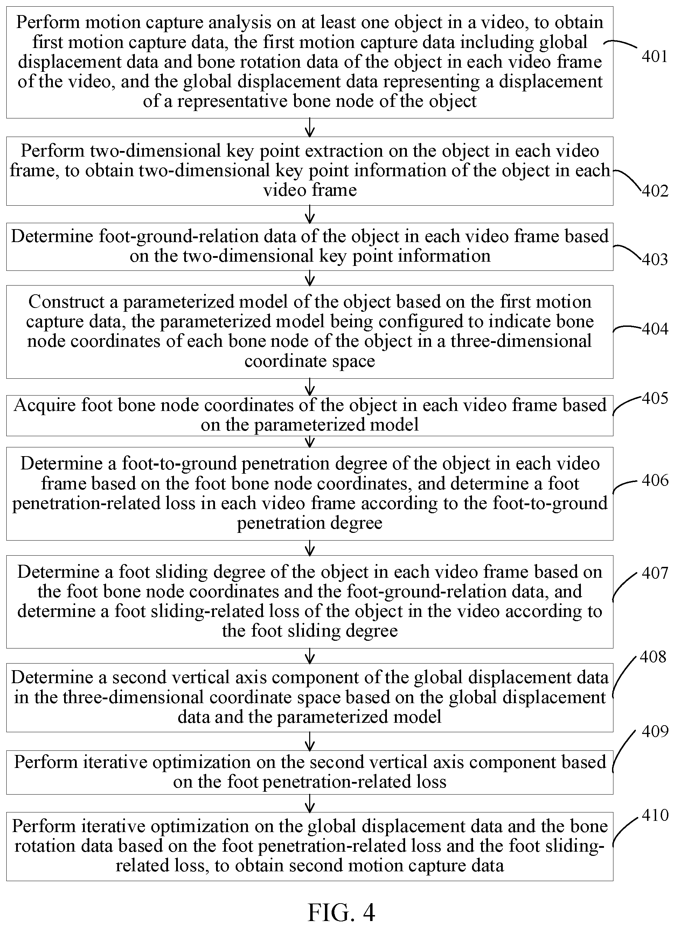

FIG. 4 is a flowchart of a motion capture data processing method according to another exemplary embodiment of this disclosure. In this embodiment, an example in which the method is performed by a computer device (including the terminal 220 and/or the server 240) is used for description, and the method includes the following operations:

Operation 401: Perform motion capture analysis on an object in a video, to obtain first motion capture data, the first motion capture data including global displacement data and bone rotation data of the object in each video frame of the video, and the global displacement data representing a displacement of a representative bone node of the object.

For a specific implementation of this operation, refer to operation 301, which is not repeated in this embodiment.

Operation 402: Perform two-dimensional key point extraction on the object in each video frame, to obtain two-dimensional key point information of the object in each video frame.

In a possible implementation, the computer device performs two-dimensional key point extraction on the object in each video frame based on the video. A quantity of two-dimensional key points may be the same as that of bone nodes, or may be greater than that of bone nodes, which is not defined in the embodiments of this disclosure.

In an embodiment, the computer device performs two-dimensional key point extraction on the object by using a vision transformer (ViT) model. In a possible implementation, the computer device inputs the video into the ViT model, and encodes and decodes each video frame of the video by using the ViT model, to output the two-dimensional key point information in each video frame.

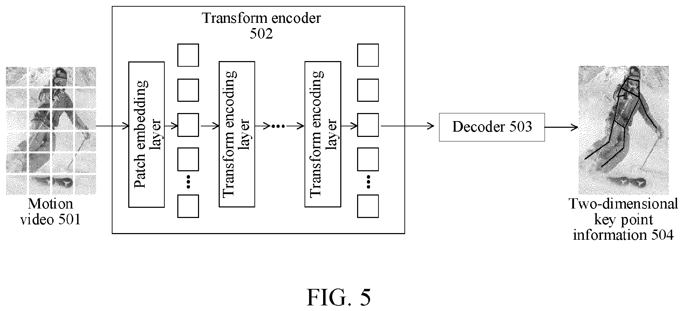

Schematically, as shown in FIG. 5, the computer device inputs each video frame of a video 501 to the ViT model. The ViT model divides each video frame into patch images of a fixed size, inputs the patch images into a patch embedding layer, performs feature point extraction on each patch image by using a transform encoder 502, and decodes, by using a decoder 503, the patch image subjected to feature point extraction, to obtain two-dimensional key point information 504 in each video frame.

Operation 403: Determine foot-ground-relation data of the object in each video frame based on the two-dimensional key point information.

In a possible implementation, the computer device determines a grounding state of a foot key point, also referred to as foot bone node, of the object based on the two-dimensional key point information of the object in each video frame, to obtain the foot-ground-relation data.

In a possible implementation, the computer device determines a grounding state of a foot bone node of the object in each video frame according to the two-dimensional key point information, which includes grounding state of a left tiptoe, a left heel, a right tiptoe, and a right heel, and then marks each foot bone node according to the grounding state, to generate the foot-ground-relation data. The grounding state of a foot bone node indicates to a relation between the foot bone node and the ground. For example, the computer device marks a foot bone node that is in contact with the grounded as 1, and marks a foot bone node that is not in contact with the ground as 0.

In a possible implementation, the computer device further inputs the two-dimensional key point information in each video frame into a temporal convolutional network

(TCN) model, and obtain the foot-ground-relation data of the object in each video frame by using the TCN model.

In a possible implementation, because a temporal sequence length of the TCN model is fixed, in a case of many video frames, the computer device further needs to segment the video frame, that is, segments the video frame into a plurality of sub-video frames of the temporal sequence length, inputs two-dimensional key point information in each sub-video frame into the TCN model, and outputs the foot-ground-relation data in each video frame by using the TCN model.

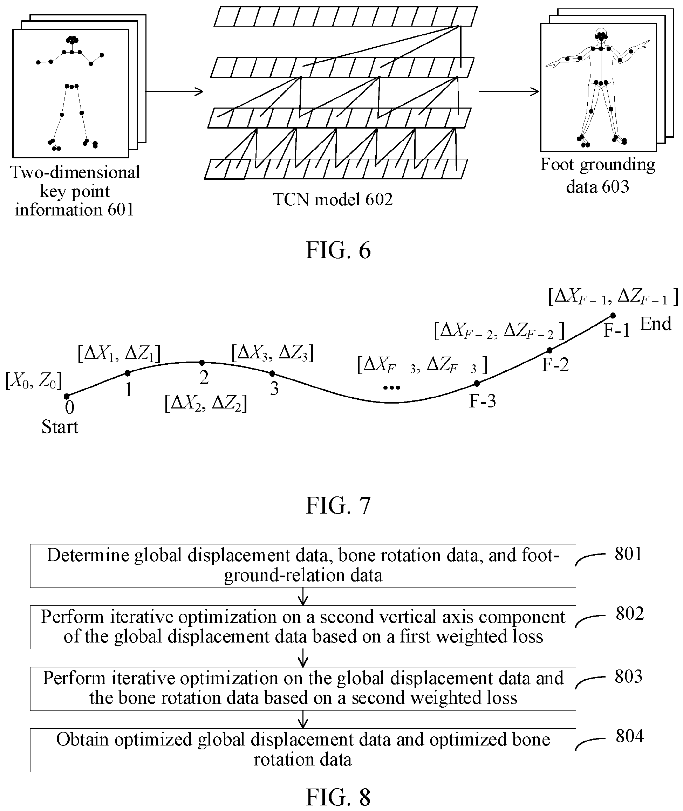

Schematically, as shown in FIG. 6, the computer device inputs sub-video frames of a temporal sequence length L and two-dimensional key point information 601 in each sub-video frame into a TCN model 602, and outputs foot-ground-relation data 603 of an object in each video frame by using the TCN model 602.

Operation 404: Construct a parameterized model of the object based on the first motion capture data, the parameterized model being configured to indicate bone node coordinates of each bone node of the object in a three-dimensional coordinate space.

In a possible implementation, to determine a foot penetration-related loss and a foot sliding-related loss in the first motion capture data, the computer device needs to first determine spatial coordinates of a foot bone node of the object in each video frame in the three-dimensional coordinate space. Therefore, the computer device may first construct the parameterized model of the object based on the first motion capture data. The parameterized model is configured to indicate the bone node coordinates of each bone node of the object in the three-dimensional coordinate space.

In a possible implementation, the computer device constructs a skinned multi-person linear (SMPL) model corresponding to the object based on the global displacement data and the bone rotation data in the first motion capture data. The SMPL model can represent a human posture change of the object. Then, the coordinates of each bone node and mesh coordinates that correspond to the object are obtained according to the SMPL model.

Operation 405: Acquire foot bone node coordinates of the object in each video frame based on the parameterized model.

Further, the computer device acquires the foot bone node coordinates of the object in each video frame by using the parameterized model, which include coordinates of a left tiptoe, coordinates of a left heel, coordinates of a right tiptoe, and coordinates of a right heel.

In a possible implementation, the computer device constructs the SMPL model corresponding to the object, and three-dimensional coordinates of each point on the SMPL model may be represented as $Q = smpl(Pose, T)$, where, $Pose$ represents the bone rotation data of the object, $T$ represents the global displacement data of the object, $Q$ may be divided into three dimensions, which are respectively $Q_x$, $Q_y$, and $Q_z$ that represent displacements of a point in three different directions.

Operation 406: Determine a foot-to-ground penetration degree of the object in each video frame based on the foot bone node coordinates, and determine a foot penetration-related loss in each video frame according to the foot-to-ground penetration degree.

In a possible implementation, after determining the foot bone node coordinates corresponding to the object in each video frame, the computer device determines the foot penetration-related loss in each video frame according to the foot bone node coordinates.

In a possible implementation, considering that the foot penetration problem refers to a foot intruding into the ground, which is represented in the three-dimensional coordinate space as that coordinates of the foot bone node are lower than the ground in a vertical axis direction, the computer device first determines a first vertical axis component of the coordinates of the foot bone node in each video frame, and then determines the foot penetration-related loss in each video frame according to the first vertical axis component.

In a possible implementation, for each video frame, the computer device respectively determines a first vertical axis component of the coordinates of the left tiptoe, a first vertical axis component of the coordinates of the left heel, a first vertical axis component of the coordinates of the right tiptoe, and a first vertical axis component of the coordinates of the right heel. The first vertical axis component may be represented as $Q_{(y,i,t)}$ that represents a value of an $i$th node in a $t$th frame on a vertical axis, namely, a $y$ axis. Then, in a case that a quantity of video frames is $F$, the foot penetration-related loss may be represented as

$$loss_1 = -\sum_{t=0}^{t=F-1}\sum_{i=0}^{i=3}\min(Q_{y,i,t}, 0)$$ . That

is, in the three-dimensional coordinate space, a value of the ground in a vertical axis direction is 0, and a foot penetration-related loss is generated in a case that the first vertical axis component of the foot bone node is a negative value. In some other embodiments, the foot penetration-related loss may be calculated with pre-defined weights assigned to different components, e.g., to different foot bone nodes, to different feet, to different frames, etc.

Operation 407: Determine a foot sliding degree of the object in each video frame based on the foot bone node coordinates and the foot-ground-relation data, and determine a foot sliding-related loss of the object in the video according to the foot sliding degree.

In a possible implementation, after determining the foot bone node coordinates corresponding to the object in each video frame, the computer device determines the foot sliding-related loss in each video frame based on the foot bone node coordinates and the foot-ground-relation data.

In a possible implementation, considering that the foot sliding problem refers to a displacement when the foot is in contact with ground, which is represented in the three-dimensional coordinate space as a displacement change in the foot bone node coordinates between adjacent video frames in a horizontal direction that includes a lateral axis direction and a longitudinal axis direction in the three-dimensional coordinate space, the computer device calculates differences between the foot bone node coordinates between adjacent frames in the lateral axis direction and the longitudinal axis direction, to determine the foot sliding-related loss.

In a possible implementation, the computer device first determines a first lateral axis component and a first longitudinal axis component of the coordinates of the foot bone node in each video frame, calculates, according to the first lateral axis component and the first longitudinal axis component, a foot displacement difference corresponding to the object between adjacent video frames, and determines the foot sliding-related loss according to the foot displacement difference and the foot-ground-relation data.

In a possible implementation, the computer device represents the foot bone node coordinates as $Q$. The first lateral axis component of the foot bone node coordinates may be represented as $Q_{(x,i,t)}$, the first longitudinal axis component may be represented as $Q_{(z,i,t)}$, and the footer displacement difference between adjacent video frames may be represented as $V_{(i,t)}$, namely, a foot displacement difference of a $i$th location between a $t$th frame and a $(t-1)$th frame. Furthermore, foot-ground-relation data of the $i$th location in the $t$th frame may be represented as $S_{i,t}$ that is represented by 0 or 1, where 1 represents that the foot is in contact with the ground, and 0 represents that the foot is not in contact with the ground. In a case that a quantity of video frames is F, the computer device may represent the foot sliding-related loss as $loss_2 = \sum_{t=0}^{t=F-2} \sum_{i=0}^{i=3} V_{i,t} S_{i,t}$. That is, in a case that the foot is in contact with the ground, a foot sliding-related loss is generated in a case that the foot displacement difference between adjacent video frames is generated.

Operation 408. Determine a second vertical axis component of the global displacement data in the three-dimensional coordinate space based on the global displacement data and the parameterized model.

In a possible implementation, to improve efficiency of optimizing the foot penetration problem and the foot sliding problem in the first motion capture data, considering that the foot penetration-related loss is mainly represented as a displacement in a vertical direction, for the foot penetration problem in the first motion capture data, the computer device perform iterative optimization on the vertical axis component only of the global displacement data in the three-dimensional coordinate space.

In a possible implementation, the computer device determines the second vertical axis component of the global displacement data in the three-dimensional coordinate space according to the global displacement data and the constructed parameterized model. In an embodiment, the global displacement data is represented as $T$, and the second vertical axis component is represented as $T_y$.

Operation 409: Perform iterative optimization on the second vertical axis component based on the foot penetration-related loss.

In a possible implementation, after determining the foot penetration-related loss and the second vertical axis component of the global displacement data, the computer device performs iterative optimization on the second vertical axis component according to the foot penetration-related loss.

In a possible implementation, the computer device performs iterative optimization on the second vertical axis component based on the foot penetration-related loss by using an Adam optimizer. For example, a learning rate of the Adam optimizer is set to 0.001, and a quantity of iterations is set to 200.

Operation 410: Perform iterative optimization on the global displacement data and the bone rotation data based on the foot penetration-related loss and the foot sliding-related loss, to obtain second motion capture data.

In a possible implementation, after determining the foot penetration-related loss and the foot sliding-related loss, and performing iterative optimization on the second vertical axis component of the global displacement data, to reduce the foot penetration problem, the computer device further needs to optimize the foot sliding problem in the first motion capture data according to the foot sliding-related loss. Furthermore, to avoid the foot penetration problem during optimization of the foot sliding problem, the computer device continues to optimize the second vertical axis component based on the foot penetration-related loss while optimizing the foot sliding problem based on the foot sliding-related loss.

In a possible implementation, the computer device performs iterative optimization on the global displacement data $T$ and the bone rotation data *Pose* according to the foot penetration-related loss and the foot sliding-related loss, to obtain the second motion capture data.

In a possible implementation, the computer device performs iterative optimization on the global displacement data and the bone rotation data based on the foot penetration-related loss and the foot sliding-related loss by using the Adam optimizer. For example, a learning rate of the Adam optimizer is set to 0.001, and a quantity of iterations is set to 600.

In a possible implementation, because change ranges of a second lateral axis component and a second longitudinal axis component of the global displacement data are relatively large in a motion process, to reduce difficulty of optimization, the computer device further adjusts optimization parameters of the global displacement data, that is, adjusts absolute variations, namely, the second lateral axis component $T_x$ and the second longitudinal axis component $T_z$, of the global displacement data to relative variations, namely, a second lateral axis component difference $\Delta x_i$ and a second longitudinal axis component difference $\Delta z_i$, between adjacent video frames, which accelerates an optimization speed, and improves an optimization effect.

In a possible implementation, the computer device first determines the second lateral axis component and the second longitudinal axis component of the global displacement data in the three-dimensional coordinate space according to the global displacement data and the parameterized model, and performs temporal difference construction on the second lateral axis component and the second longitudinal axis component, to obtain the second lateral axis component difference and the second longitudinal axis component difference between adjacent video frames.

Schematically, as shown in FIG. 7, the computer device constructs a temporal difference relationship for $x, z$ dimensions in the global displacement data $T$, and adjusts the absolute variations, namely, the second lateral axis component $T_x$ and the second longitudinal axis component $T_z$, of the global displacement data to the relative variations, namely, the second lateral axis component difference $\Delta x_i$ and the second longitudinal axis component difference $\Delta z_i$, between adjacent video frames.

Further, the computer device performs iterative optimization on the second lateral axis component difference, the second longitudinal axis component difference, the second vertical axis component, and the bone rotation data based on the foot penetration-related loss and the foot sliding-related loss. An optimization parameter composed of the second lateral axis component difference, the second longitudinal axis component difference, and the second vertical axis component may be expressed as $[\Delta x, \Delta z, T_y]$. Then, the computer device determines optimized global displacement data according to optimized second lateral axis component difference, optimized second longitudinal axis component difference, and optimized second vertical axis component, and obtains the second motion capture data according to the optimized global displacement data and optimized bone rotation data. The optimized global displacement data may be represented as $\hat{T}$, and the optimized bone rotation data may be represented as $\widehat{Pose}$.

According to the foregoing embodiments, the foot bone node coordinates are determined based on the constructed parameterized model of the object, the foot penetration-related loss is determined according to the second vertical axis component of the foot bone node coordinates in each video frame, and the foot displacement difference is determined according to a change value of the foot bone node coordinates between adjacent video frames, to obtain the foot sliding-related loss. In this way, efficiency and accuracy of loss calculation in an iterative optimization process are improved.

In addition, iterative optimization is first performed on the second vertical axis component for the foot penetration problem, and then iterative optimization is performed on the global displacement data and the bone rotation data for the foot sliding problem. Furthermore, iterative optimization of the second vertical axis component is continued while iterative optimization is performed for the foot sliding problem. In this way, efficiency of iterative optimization is improved, and optimization effects on the foot penetration problem and the foot sliding problem are enhanced.

In a possible implementation, in a process of performing iterative optimization on the global displacement data and the bone rotation data for the foot penetration problem and the foot sliding problem, to avoid a large difference between the optimized global displacement data and the global displacement data before optimization, especially the large difference between the optimized global displacement data and the global displacement data before optimization that is caused by a cumulative error generated in a case that the optimization parameter is adjusted to a coordinate component difference between adjacent video frames, the computer device determines a global displacement loss according to the global displacement data before optimization and the optimized global displacement data, and performs iterative optimization on the global displacement data and the bone rotation data based on the global displacement loss.

In a possible implementation, after optimizing the global displacement data according to the foot penetration-related loss and the foot sliding-related loss, to obtain the optimized global displacement data, the computer device determines the global displacement loss according to the global displacement data before optimization and the optimized global displacement data.

In a possible implementation, considering that the cumulative error is typically generated after a plurality of video frames are spaced, the computer device selects global displacement data in the spaced video frames, and calculate a global displacement difference between the global displacement data before optimization and optimized global displacement data in the spaced video frames, to determine the global displacement loss.

In a possible implementation, the computer device first determines a video frame interval of the video, and the determines a sampled video frame and a quantity of sampled video frames according to the video frame interval and a quantity of video frames of the video. Further, the computer device determines a global displacement difference between global displacement data and optimized global displacement data in each sampled video frame according to the global displacement data before optimization and the optimized global displacement data, and then determines the global displacement loss according to the quantity of sampled video frames and the global displacement difference by using a mean square error calculation formula.

In a possible implementation, the global displacement data before optimization is represented as $T_n$, the optimized global displacement data is represented as $\widehat{T_n}$, the quantity of sampled video frames is $J$, and the global displacement loss is represented as $loss_3 = \sum_{n=0}^{n=J-1} MSE\left(T_n, \widehat{T_n}\right)$.

Then, the computer device performs iterative optimization on the global displacement data and the bone rotation data according to the foot penetration-related loss, the foot sliding-related loss, and the global displacement loss, to obtain the second motion capture data.

According to the foregoing embodiments, after the global displacement data is optimized according to the foot penetration-related loss and the foot sliding-related loss, to obtain the optimized global displacement data, the global displacement difference between the global displacement data before optimization and the optimized global displacement data in the spaced video frames is determined, the global displacement loss is obtained by using the mean square error formula, and iterative optimization is performed on the global displacement data and the bone rotation data based on the global displacement loss. In this way, a problem of a large displacements between the optimized global displacement data and the global displacement data before optimization is avoided, to ensure that the second motion capture data and the first motion capture data are as close as possible, and iterative optimization efficiency and data quality of the second motion capture data are improved.

In a possible implementation, to achieve a smooth animation effect according to the second motion capture data and avoid a sudden change between video frames, the computer device further determines a global displacement speed loss between adjacent video frames according to the global displacement data, and then performs iterative optimization on the global displacement data and the bone rotation data according to the foot penetration-related loss, the foot sliding-related loss, and the global displacement speed loss, to obtain the second motion capture data.

In a possible implementation, the global displacement speed difference between adjacent video frames is represented as $A_t$, namely, a global displacement speed difference between a $t$th frame and a $(t-1)$th frame, or an acceleration of the $t$th frame, and in a case that the quantity of video frames is $F$, the global displacement speed loss is represented as $loss_4 = \sum_{t=0}^{t=F-3} A_t$.

According to the foregoing embodiments, iterative optimization also involves the global displacement speed loss. In this way, a problem of a sudden change in the global displacement data between the video frames is reduced, iterative optimization efficiency is improved, and smoothness of an animation generated according to the second motion capture data is improved.

In a possible implementation, to perform iterative optimization according to the foot penetration-related loss, the foot sliding-related loss, the global displacement loss, and the global displacement speed loss for the foot penetration problem and the foot sliding problem, and improve iterative optimization efficiency, the computer device divides an iterative optimization process into two stages, and sets different loss weights at the two stages.

In a possible implementation, at the first stage, the computer device weights the foot penetration-related loss, the foot sliding-related loss, the global displacement loss, and the global displacement speed loss based on a first foot penetration-related loss weight, a first foot sliding-related loss weight, a first global displacement loss weight, and a first global displacement speed loss weight, to obtain a first weighted loss, and then performs iterative optimization on the global displacement data based on the first weighted loss.

In a possible implementation, at the first stage, to perform iterative optimization on the second vertical axis component of the global displacement data for the foot penetration problem, the first foot penetration-related loss weight is set to be greater than the first foot sliding-related loss weight, greater than the first global displacement loss weight, and greater than the first global displacement speed loss weight.

In an exemplary example, the first foot penetration-related loss weight is set to 100, and the first foot sliding-related loss weight, the first global displacement loss weight, and the first global displacement speed loss weight are all set to 0.

In a possible implementation, in a case that iterative optimization is performed on the second vertical axis component of the global displacement data, at the second stage, the computer device weights the foot penetration-related loss, the foot sliding-related loss, the global displacement loss, and the global displacement speed loss based on a second foot penetration-related loss weight, a second foot sliding-related loss weight, a second global displacement loss weight, and a second global displacement speed loss weight, to obtain a second weighted loss, and then performs iterative optimization on the global displacement data and the bone rotation data based on the second weighted loss, to obtain the second motion capture data.

In a possible implementation, at the second stage, because the iterative optimization performed based on the foot penetration-related loss is merely to prevent the foot penetration problem from occurring again during optimization for the foot sliding problem, and a main objective of the second stage is to perform iterative optimization on the global displacement data and the bone rotation data for the foot sliding problem, the second foot penetration-related loss weight is set to be less than the second foot sliding-related loss weight, less than the second global displacement loss weight, and less than the second global displacement speed loss weight.

In an exemplary example, the second foot penetration-related loss weight is set to 100, and the second foot sliding-related loss weight, the second global displacement loss weight, and the second global displacement speed loss weight are all set to 1000.

In a possible implementation, the computer device respectively represents the loss weights corresponding to the foot penetration-related loss, the foot sliding-related loss, the global displacement loss, and the global displacement speed loss as $w_1$, $w_2$, $w_3$, and $w_4$, and the weighed loss is represented as $loss = w_1 * loss_1 + w_2 * loss_2 + w_3 * loss_3 + w_4 * loss_4$.

According to the foregoing embodiments, iterative optimization is performed on the global displacement data and the bone rotation data in stages, that is, iterative optimization is performed on the global displacement data and the bone rotation data in different stages based on different loss weights. In this way, iterative optimization efficiency is improved, and data quality of the second motion capture data is improved.

In a possible implementation, the entire process of performing iterative optimization on the global displacement data and the bone rotation data is considered as a process of performing iterative optimization on the global displacement data and the bone rotation data by using an iterative optimization model. The iterative optimization model is divided into two stages. Inputs of the iterative optimization model are the global displacement data, the bone rotation data, and the foot-ground-relation data, and outputs are the optimized global displacement data and the optimized bone rotation data.

FIG. 8 is a flowchart of staged iterative optimization according to an exemplary embodiment of this application.

Operation 801: Determine global displacement data, bone rotation data, and foot-ground-relation data.

First, a computer device obtains the global displacement data $T$ and the bone rotation data $Pose$ according to first motion capture data, and performs foot grounding state analysis on a video, to obtain the foot-ground-relation data S.

Operation 802: Perform iterative optimization on a second vertical axis component of the global displacement data based on a first weighted loss.

Second, the computer device acquires a first foot penetration-related loss weight $w_1 = 100$, a first foot sliding-related loss weight $w_2 = 0$, a first global displacement loss weight $w_3 = 0$, and a first global displacement speed loss weight $w_4 = 0$. Furthermore, the computer device acquires a quantity of iterations of 200, and a learning rate of an Adam optimizer of 0.001. Then, the computer device performs iterative optimization on the second vertical axis component $T_y$ of the global displacement data based on a foot penetration-related loss $loss_1$.

Operation 803: Perform iterative optimization on the global displacement data and the bone rotation data based on a second weighted loss.

After performing iterative optimization on the second vertical axis component $T_y$, the computer device acquires a second foot penetration-related loss weight $w_1 = 100$, a second foot sliding-related loss weight $w_2 = 1000$, a second global displacement loss weight $w_3 = 1000$, a second global displacement speed loss weight $w_4 = 1000$. Furthermore, the computer device acquires a quantity of iterations of 600, and a learning rate of the Adam optimizer of 0.001. Then, the computer device performs iterative optimization on the adjusted global displacement data $[\Delta x, \Delta z, T_y]$ and the bone rotation data $Pose$ based on the foot penetration-related loss $loss_1$, a foot sliding-related loss $loss_2$, a global displacement loss $loss_3$, and a global displacement speed loss $loss_4$.

Operation 804: Obtain optimized global displacement data and optimized bone rotation data.

After completing the quantity of iterations, the computer device obtains the optimized global displacement data $\hat{T}$ and the optimized bone rotation data $Pose$, and then obtains second motion capture data.

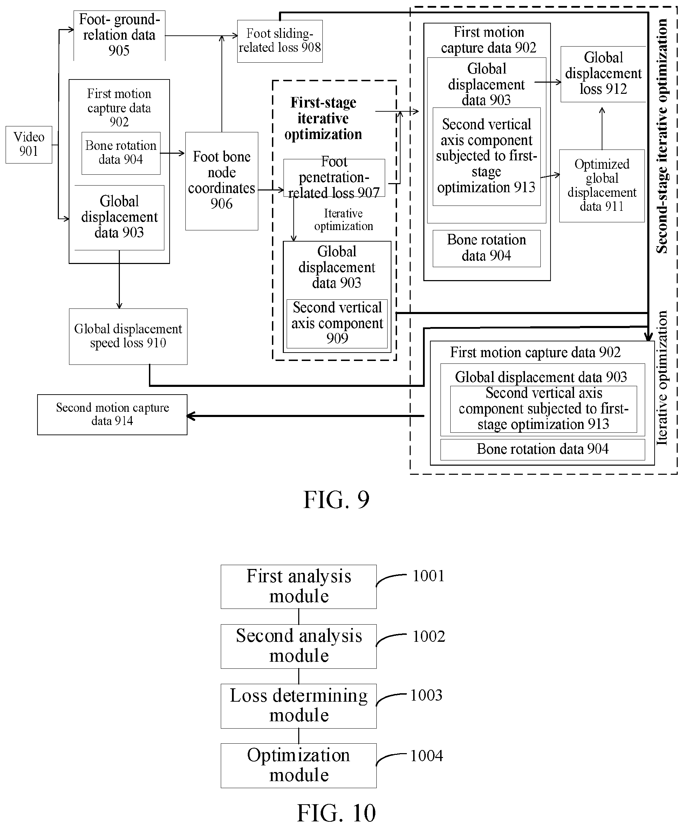

FIG. 9 is a flowchart of a motion capture data processing method according to another exemplary embodiment of this application.

First, a computer device performs video motion capture analysis on a video 901, to obtain first motion capture data 902. The first motion capture data 902 includes global displacement data 903 and bone rotation data 904 of an object in each video frame of the video. Next, the computer device performs foot grounding state analysis on the video 901, to obtain foot-ground-relation data 905 of the object in each video frame. Next, the computer device constructs a parameterized model of the object according to the first motion capture data 902, and obtains foot bone node coordinates 906 of the object in each video frame according to the parameterized model. Next, the computer device determines a foot penetration-related loss 907 in the first motion capture data 902 in each video frame according to the foot bone node coordinates 906, and determines a foot sliding-related loss 908 in the first motion capture data 902 according to the foot bone node coordinates 906 and the foot-ground-relation data 905. Furthermore, to improve smoothness of an animation video and reduce a sudden change, the computer device may further determine a global displacement speed loss 910 in the first motion capture data 902 according to the global displacement data 903.

Second, the computer device performs first-stage iterative optimization for a foot penetration problem in the first motion capture data 902, that is, performs iterative optimization on a second vertical axis component 909 of the global displacement data 903 based on the foot penetration-related loss 907, to obtain an optimized second vertical axis component 913. After performing iterative optimization on the second vertical axis component 909, the computer device performs second-stage iterative optimization for a foot sliding problem in the first motion capture data 902. Furthermore, to prevent the foot penetration problem from occurring again during optimization for the foot sliding problem, the computer device may continue optimization for the foot penetration problem during the second-stage iterative optimization, that is, perform iterative optimization on the global displacement data 903 and the bone rotation data 904 based on the foot penetration-related loss 907, the foot sliding-related loss 908, and the global displacement speed loss 910. Meanwhile, to avoid a large change in the global displacement data before and after optimization, in each optimization process, the computer device may further determine a global displacement loss 912 according to the global displacement data 903 before optimization and the optimized global displacement data 911. Then, the computer device performs iterative optimization on the global displacement data 903 and the bone rotation data 904 based on the foot penetration-related loss 907, the foot sliding-related loss 908, the global displacement loss 912, and the global displacement speed loss 910, to finally obtain second motion capture data 914.

FIG. 10 is a structural block diagram of a motion capture data processing apparatus according to an exemplary embodiment of this application. The apparatus includes:

a first analysis module 1001, configured to perform motion capture analysis on an object in a video, to obtain first motion capture data, the first motion capture data including global displacement data and bone rotation data of the object in each video frame of the video, and the global displacement data representing a displacement of a representative bone node of the object;

a second analysis module 1002, configured to analyze a foot grounding state of the object, to obtain foot-ground-relation data of the object in each video frame, the foot-ground-relation data representing a foot grounding manner of the object;

a loss determining module 1003, configured to determine a foot-to-ground penetration degree of the object in each video frame based on the first motion capture data and the foot-ground-relation data, and determine a foot penetration-related loss of the object in the video according to the foot-to-ground penetration degree; and determine a foot sliding degree of the object in each video frame based on the first motion capture data and the foot-ground-relation data, and determine a foot sliding-related loss of the object in the video according to the foot sliding degree; and

an optimization module 1004, configured to perform iterative optimization on the first motion capture data based on the foot penetration-related loss and the foot sliding-related loss, to obtain second motion capture data of the object.

The loss determining module 1003 includes:

a model constructing unit, configured to construct a parameterized model of the object based on the first motion capture data, the parameterized model being configured to indicate bone node coordinates of each bone node of the object in a three-dimensional coordinate space;

a coordinate acquiring unit, configured to acquire foot bone node coordinates of the object in each video frame based on the parameterized model;

a first loss determining unit, configured to determine the foot-to-ground penetration degree of the object in each video frame based on the foot bone node coordinates, and determine the foot penetration-related loss in each video frame according to the foot-to-ground penetration degree; and

a second loss determining unit, configured to determine the foot sliding degree of the object in each video frame based on the foot bone node coordinates and the foot-ground-relation data, and determine the foot sliding-related loss in each video frame according to the foot sliding degree.

In an embodiment, the first loss determining unit is configured to:

determine a first vertical axis component of the foot bone node coordinates in each video frame based on the foot bone node coordinates; and

determine the foot penetration-related loss in each video frame based on the first vertical axis component.

In an embodiment, the second loss determining unit is configured to:

determine a first lateral axis component and a first longitudinal axis component of the foot bone node coordinates in each video frame based on the foot bone node coordinates;

determine a foot displacement difference of the object between adjacent video frames based on the first lateral axis component and the first longitudinal axis component; and

determine the foot sliding-related loss based on the foot displacement difference and the foot-ground-relation data.

In an embodiment, the optimization module 1004 includes:

a component determining unit, configured to determine a second vertical axis component of the global displacement data in the three-dimensional coordinate space based on the global displacement data and the parameterized model;

a first optimization unit, configured to perform iterative optimization on the second vertical axis component based on the foot penetration-related loss; and

a second optimization unit, configured to perform iterative optimization on the global displacement data and the bone rotation data based on the foot penetration-related loss and the foot sliding-related loss, to obtain the second motion capture data.

In an embodiment, the second optimization unit is further configured to:

optimize the global displacement data based on the foot penetration-related loss and the foot sliding-related loss, to obtain optimized global displacement data;

determine a global displacement loss based on the global displacement data and the optimized global displacement data; and

perform iterative optimization on the global displacement data and the bone rotation data based on the foot penetration-related loss, the foot sliding-related loss, and the global displacement loss, to obtain the second motion capture data.

In an embodiment, the second optimization unit is further configured to:

determine a video frame interval of the video;

determine a sampled video frame and a quantity of sampled video frames based on the video frame interval;

determine a global displacement difference between global displacement data and optimized global displacement data in each sampled video frame based on the global displacement data and the optimized global displacement data; and

determine the global displacement loss based on the quantity of sampled video frames and the global displacement difference.

In an embodiment, the second optimization unit is further configured to:

determine a global displacement speed loss between adjacent video frames based on the global displacement data; and

perform iterative optimization on the global displacement data and the bone rotation data based on the foot penetration-related loss, the foot sliding-related loss, and the global displacement speed loss, to obtain the second motion capture data.

In an embodiment, the second optimization unit is further configured to:

determine a second lateral axis component and a second longitudinal axis component of the global displacement data in the three-dimensional coordinate space based on the global displacement data and the parameterized model;

perform temporal difference construction on the second lateral axis component and the second longitudinal axis component, to obtain a second lateral axis component difference and a second longitudinal axis component difference between adjacent video frames;

perform iterative optimization on the second lateral axis component difference, the second longitudinal axis component difference, the second vertical axis component, and the bone rotation data based on the foot penetration-related loss and the foot sliding-related loss;

determine the optimized global displacement data based on the optimized second lateral axis component difference, the optimized second longitudinal axis component difference, and the optimized second vertical axis component; and

obtain the second motion capture data based on the optimized global displacement data and the optimized bone displacement data.

In an embodiment, the apparatus further includes:

a first loss determining module, configured to weight the foot penetration-related loss, the foot sliding-related loss, the global displacement loss, and the global displacement speed loss based on a first foot penetration-related loss weight, a first foot sliding-related loss weight, a first global displacement loss weight, and a first global displacement speed loss weight, to obtain a first weighted loss;

a second loss determining module, configured to weight the foot penetration-related loss, the foot sliding-related loss, the global displacement loss, and the global displacement speed loss based on a second foot penetration-related loss weight, a second foot sliding-related loss weight, a second global displacement loss weight, and a second global displacement speed loss weight, to obtain a second weighted loss;

a first optimization unit, configured to perform iterative optimization on the global displacement data based on the first weighted loss; and

a second optimization unit, configured to perform iterative optimization on the global displacement data and the bone rotation data based on the second weighted loss in a case that iterative optimization is performed on the global displacement data, to obtain the second motion capture data.

In an embodiment,

the first foot penetration-related loss weight is greater than the first foot sliding-related loss weight, greater than the first global displacement loss weight, and greater than the first global displacement speed loss weight; and

the second foot penetration-related loss weight is less than the second foot sliding-related loss weight, less than the second global displacement loss weight, and less than the second global displacement speed loss weight.

In an embodiment, the second analysis module 1002 includes:

a key point extracting module, configured to perform two-dimensional key point extraction on the object in each video frame, to obtain two-dimensional key point information of the object in each video frame; and

a data determining module, configured to determine the foot-ground-relation data of the object in each video frame based on the two-dimensional key point information.

In an embodiment, the data determining module is configured to:

determine a grounding state of each foot bone node of the object in each video frame based on the two-dimensional key point information; and

mark each foot bone node in each video frame based on the grounding state of each foot bone node, to obtain the foot-ground-relation data.

In conclusion, according to the embodiments of this application, motion capture analysis is performed on the object in the video, to obtain the first motion capture data, and the foot grounding state of the object is analyzed according to the video, to obtain the foot-ground-relation data of the object in each video frame. Then, a computer device may determine the foot sliding-related loss and the foot penetration-related loss according to the first motion capture data and the foot-ground-relation data, and perform iterative optimization on the first motion capture data according to the foot sliding-related loss and the foot penetration-related loss, to obtain the second motion capture data. By adopting the solutions provided in the embodiments of this application, the foot sliding problem and the foot penetration problem in the video motion capture data can be reduced, data quality of the video motion capture data is improved, and a repairing workload and repairing costs of post animation production are reduced.

The apparatus provided in the foregoing embodiments is illustrated with an example of division of the foregoing functional modules. In actual application, the functions may be allocated to and completed by different functional modules according to requirements, that is, the internal structure of the apparatus is divided into different functional modules, to implement all or some of the functions described above. In addition, the apparatus provided in the foregoing embodiments and the method embodiments belong to the same conception. For an implementation process of the apparatus, refer to the method embodiments, which is not repeated here.

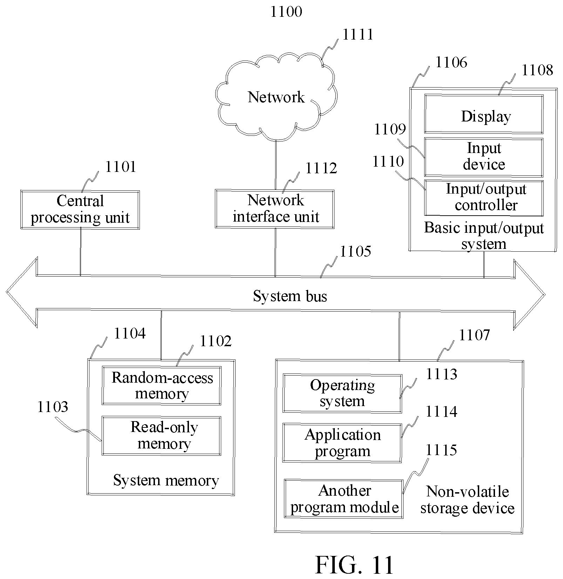

FIG. 11 is a schematic structural diagram of a computer device according to an exemplary embodiment of this disclosure. Specifically, a computer device 1100 includes a central processing unit (CPU) 1101, a system memory 1104 including a random-access memory (RAM) 1102 and a read-only memory (ROM) 1103, and a system bus 1105 connecting the system memory 1104 and the central processing unit 1101. The computer device 1100 further includes a basic input/output (I/O) system 1106 assisting in information transmission between components in the computer, and a non-volatile storage device 1107 configured to store an operating system 1113, an application program 1114, and another program module 1115.

The basic I/O system 1106 includes a display 1108 configured to display information and an input device 1109 configured to provide an information inputting function for a user, such as a mouse or a keyboard. Both the display 1108 and the input device 1109 are connected to the CPU 1101 through an input/output controller 1110 connected to the system bus 1105. The basic I/O system 1106 may further include the input/output controller 1110 configured to receive and process inputs from a plurality of other devices such as a keyboard, a mouse, and an electronic stylus. Similarly, the input/output controller 1110 further provides an output to a display screen, a printer, or another type of output device.

The non-volatile storage device 1107 is connected to the CPU 1101 through a storage controller (not shown) connected to the system bus 1105. The non-volatile storage device 1107 and an associated computer-readable medium thereof provide non-volatile storage to the computer device 1100. In other words, the non-volatile storage device 1107 may include a computer-readable medium (not shown) such as a hard disk or a drive.

Without loss of generality, the computer-readable medium may include a computer storage medium and a communication medium. The computer storage medium includes volatile and non-volatile, removable and non-removable media that store information such as computer-readable instructions, data structures, program modules, or other data and that are implemented by using any method or technology. The computer storage medium includes an RAM, an ROM, a flash memory or another solid-state storage technology, a compact disc ROM (CD-ROM), a digital versatile disc (DVD) or another optical memory, a magnetic cassette, a magnetic tape, a magnetic disk memory, or another magnetic storage device. Certainly, those skilled in the art may be aware that the computer storage medium is not limited to the foregoing several types. The system memory 1104 and the non-volatile storage device 1107 may be collectively referred to as a memory.

The memory stores one or more programs. The one or more programs are executed by one or more CPUs 1101. The one or more programs include instructions for implementing the foregoing method. The CPU 1101 executes the one or more programs to implement the method provided in the foregoing method embodiments.

According to the embodiments of this disclosure, the computer device 1100 may further be connected, through a network such as the Internet, to a remote computer on the network and run. That is, the computer device 1100 may be connected to a network 1111 through a network interface unit 1112 connected to the system bus 1105, or may be connected to another type of network or a remote computer system (not shown) through the network interface unit 1112.

The embodiments of this disclosure further provide a computer-readable storage medium, which has at least one instruction stored therein. A processor loads and executes the at least one instruction to implement the motion capture data processing method described in the foregoing embodiments.

In an embodiment, the computer-readable storage medium includes: an ROM, an RAM, a solid-state drive (SSD), an optical disc, or the like. The RAM may include a resistance RAM (ReRAM) and a dynamic RAM (DRAM).

The embodiments of this disclosure provide a computer program product, which includes computer instructions. The computer instructions are stored in a computer-readable storage medium. A processor of a computer device reads the computer instructions from the computer-readable storage medium, and executes the computer instructions, to cause the computer device to perform the motion capture data processing method described in the foregoing embodiments.

Those of ordinary skill in the art may understand that all or some of the operations of the foregoing embodiments may be implemented by hardware or a program instructing related hardware. The program may be stored in a computer-readable storage medium. The storage medium mentioned above may be an ROM, a magnetic disk, an optical disc, or the like.

Technical features of the foregoing embodiments may be combined in different manners to form other embodiments. For ease of description, not all possible combinations of the technical features of the foregoing embodiments are described. However, as long as there is no contradiction in the combinations of these technical features, the combinations are considered to fall within the scope of the description.

The foregoing embodiments only represent several implementations of this disclosure, and the descriptions are specific and detailed, but is not to be construed as limitations to the patent scope of this disclosure. Those of ordinary skill in the art may further make several transformations and improvements without departing from the concept of this disclosure, and these transformations and improvements fall within the scope of protection of this disclosure. Therefore, the scope of protection of this disclosure is subject to the appended claims.

**Claims**

1. A motion capture data processing method, performed by a computer device and comprising:

   performing motion capture analysis on at least one object in a video to obtain initial motion capture data, wherein the object has at least one foot, the initial motion capture data comprises global displacement data and bone rotation data of the object in each video frame of the video, and the global displacement data represents displacement data of bone nodes of the object;
   obtaining foot-ground-relation data of the object in each video frame based on the initial motion capture data, wherein the foot-ground-relation data indicates a relation between each foot of the object and ground;
   determining a first relationship in a vertical direction between each of the at least one foot of the object and the ground in each video frame based on the initial motion capture data and the foot-ground-relation data, and determining a foot penetration-related loss of the object in the video according to the first relationship, wherein the foot penetration-related loss indicates an image error caused by the at least one foot penetrating into the ground;
   determining a second relationship in at least one horizontal direction between each foot of the object and the ground in each video frame based on the initial motion capture data and the foot-ground-relation data, and determining a foot sliding-related loss of the object in the video according to the second relationship, wherein the foot sliding-related loss of the object indicates an image error caused by the at least one foot sliding on the ground; and
   performing iterative optimization on initial first motion capture data based on the foot penetration-related loss and the foot sliding-related loss to obtain corrected motion capture data of the object.

2. The method according to claim 1, wherein determining the first relationship comprises:

   constructing a parameterized model of the object based on the initial motion capture data, the parameterized model being configured to indicate bone node coordinates of each bone node of the object in a three-dimensional coordinate space;
   acquiring coordinates of foot bone nodes of the object in each video frame from the parameterized model; and
   determining the first relationship in each video frame based on the coordinates of the foot bone nodes.

3. The method according to claim 1 or 2, wherein determining the first relationship based on the coordinates of the foot bone nodes comprises:

determining a vertical axis component of the coordinates of the foot bone nodes in each video frame based on the foot bone node coordinates and the foot-ground-relation data; and determining the first relationship in each video frame based on the vertical axis component.

4. The method according to any one of claims 1 to 3, wherein determining the position relationship comprises:

determining a lateral axis component and a longitudinal axis component of coordinates of the foot bone nodes in each video frame based on the foot bone node coordinates and the foot-ground-relation data; determining a foot displacement difference of the object between adjacent video frames based on the lateral axis component and the longitudinal axis component; and determining the second relationship in each video frame based on the foot displacement difference.

5. The method according to any one of claims 1 to 4, wherein performing the iterative optimization on the initial motion capture data based on the foot penetration-related loss and the foot sliding-related loss to obtain the corrected motion capture data of the object comprises:

determining a vertical axis component of the global displacement data in the three-dimensional coordinate space based on the global displacement data and the parameterized model; performing iterative optimization on a vertical axis component of coordinates of the foot bone nodes in each video frame based on the foot penetration-related loss; performing iterative optimization on the global displacement data and the bone rotation data based on the foot penetration-related loss and the foot sliding-related loss; and obtaining the corrected motion capture data based on the vertical axis component, the global displacement data and the bone rotation data after the iterative optimization.

6. The method according to any one of claims 1 to 5, wherein performing the iterative optimization on the global displacement data and the bone rotation data based on the foot penetration-related loss and the foot sliding-related loss comprises:

optimizing the global displacement data based on the foot penetration-related loss and the foot sliding-related loss, to obtain optimized global displacement data; determining a global displacement loss based on the global displacement data and the optimized global displacement data; and performing iterative optimization on the global displacement data and the bone rotation data based on the foot penetration-related loss, the foot sliding-related loss, and the global displacement loss.

7. The method according to any one of claims 1 to 6, wherein determining the global displacement loss based on the global displacement data and the optimized global displacement data comprises:

determining a video frame interval of the video; determining a sampled video frame and a quantity of sampled video frames based on the video frame interval; determining a global displacement difference between the global displacement data and optimized global displacement data in each sampled video frame based on the global displacement data and the optimized global displacement data; and determining the global displacement loss based on the quantity of sampled video frames and the global displacement difference.

8. The method according to any one of claims 1 to 7, wherein performing the iterative optimization on the global displacement data and the bone rotation data based on the foot penetration-related loss and the foot sliding-related loss comprises:

determining a global displacement speed loss between adjacent video frames based on the global displacement data; and performing the iterative optimization on the global displacement data and the bone rotation data based on the foot penetration-related loss, the foot sliding-related loss, and the global displacement speed loss, to obtain the corrected motion capture data.

9. The method according to any one of claims 1 to 8, wherein performing the iterative optimization on the global displacement data and the bone rotation data based on the foot penetration-related loss and the foot sliding-related loss comprises:

determining a lateral axis component a longitudinal axis component, and a vertical axis component of the global displacement data in the three-dimensional coordinate space based on the global displacement data and the parameterized model;

performing temporal difference construction on the lateral axis component and the longitudinal axis component, to obtain a lateral axis component difference and a longitudinal axis component difference between adjacent video frames;

performing the iterative optimization on the lateral axis component difference, the longitudinal axis component difference, the vertical axis component, and the bone rotation data based on the foot penetration-related loss and the foot sliding-related loss to obtain an optimized lateral axis component different, an optimized longitudinal axis component difference, and an optimized vertical axis component; and

determining optimized global displacement data based on the optimized lateral axis component difference, the optimized longitudinal axis component difference, and the optimized vertical axis component.

10. The method according to any one of claims 1 to 9, further comprising:

weighting the foot penetration-related loss, the foot sliding-related loss, a global displacement loss, and a global displacement speed loss based on a first foot penetration-related loss weight, a first foot sliding-related loss weight, a first global displacement loss weight, and a first global displacement speed loss weight, to obtain a first weighted loss;

weighting the foot penetration-related loss, the foot sliding-related loss, the global displacement loss, and the global displacement speed loss based on a second foot penetration-related loss weight, a second foot sliding-related loss weight, a second global displacement loss weight, and a second global displacement speed loss weight, to obtain a second weighted loss, wherein second and first weights have different values;

performing iterative optimization on the global displacement data based on the first weighted loss; and

performing iterative optimization on the global displacement data and the bone rotation data based on the second weighted loss to obtain the corrected motion capture data.

11. The method according to any one of claims 1 to 10, wherein the first foot penetration-related loss weight is greater than the first foot sliding-related loss weight, greater than the first global displacement loss weight, and greater than the first global displacement speed loss weight.

12. The method according to any one of claims 1 to 11, wherein the second foot penetration-related loss weight is less than the second foot sliding-related loss weight, less than the second global displacement loss weight, and less than the second global displacement speed loss weight.

13. The method according to any one of claims 1 to 12, wherein obtaining foot-ground-relation data of the object in each video frame comprises:

performing two-dimensional key point extraction on the object in each video frame, to obtain two-dimensional key point information of the object in each video frame; and

determining the foot-ground-relation data of the object in each video frame based on the two-dimensional key point information.

14. The method according to claim 13, wherein the determining the foot-ground-relation data of the object in each video frame based on the two-dimensional key point information comprises:

determining a relation of each foot bone node of the object with the ground in each video frame based on the two-dimensional key point information; and

marking each foot bone node in each video frame based on the relation of each foot bone node with the ground to obtain the foot-ground-relation data.

15. A motion capture data processing apparatus, comprising:

a first analysis module, configured to perform motion capture analysis on at least one object in a video, to obtain initial motion capture data, , the first motion capture data comprises global displacement data and bone rotation data of the object in each video frame of the video, and the global displacement data represents displacement data of bone nodes of the object;

a second analysis module, configured to obtain foot-ground-relation data of the object in each video frame based on the initial motion capture data, wherein the foot-ground-relation data indicates a relation between each foot of the object and ground;

a loss determining module, configured to determine a first relationship in a vertical direction between each of the at least one foot of the object and the ground in each video frame based on the initial motion capture data, and determine a foot penetration-related loss of the object in the video according to the first relationship, wherein the foot penetration-related loss indicates an image error caused by the at least one foot penetrating into the ground; and determine a second relationship in at least one horizontal direction between each foot of the object and the ground in each video frame based on the first motion capture data and the foot-ground-relation data, and determine a foot sliding-related loss of the object in the video according to the second relationship, wherein the foot sliding-related loss indicates an image error caused by the at least one foot sliding on the ground; and an optimization module, configured to perform iterative optimization on the initial motion capture data based on the foot penetration-related loss and the foot sliding-related loss, to obtain corrected motion capture data of the object.

16. An electronic device, comprising a processor and a memory, the memory having at least one instruction stored therein, and the processor loading and executing the at least one instruction to implement the motion capture data processing method according to any one of claims 1 to 14.

17. A computer-readable storage medium, having at least one instruction stored therein, a processor executing the at least one instruction to implement the motion capture data processing method according to any one of claims 1 to 14.

18. A computer program product, comprising at least one instruction, a processor executing the at least one instruction to implement the motion capture data processing method according to any one of claims 1 to 14.

Grounding state analyzing module 102

Video motion capture analysis module 103

Video 101

Iterative optimization module 104

Second motion capture data 105

FIG. 1

220

First motion capture data and foot grounding data

240

Second motion capture data

220

FIG. 2

Perform motion capture analysis on at least one object in a video, to obtain initial motion capture data, the initial motion capture data including global displacement data and bone rotation data of the object in each video frame of the video, and the global displacement data representing a displacement of a representative bone node of the object

301

Analyze a foot grounding state of the object, to obtain foot-ground-relation data of the object in each video frame, the foot-ground-relation data indicating a relation between each foot of the object and the ground

302

Determine a foot-to-ground penetration degree of the object in each video frame based on the initial motion capture data, and determine a foot penetration-related loss of the object in the video according to the foot-to-ground penetration degree

303

Determine a foot sliding degree of the object in each video frame based on the initial motion capture data and the foot grounding data, and determine a foot sliding-related loss of the object in the video according to the foot sliding degree

304

Perform iterative optimization on the initial motion capture data based on the foot penetration-related loss and the foot sliding-related loss, to obtain corrected motion capture data of the object

305

FIG. 3

Perform motion capture analysis on at least one object in a video, to obtain first motion capture data, the first motion capture data including global displacement data and bone rotation data of the object in each video frame of the video, and the global displacement data representing a displacement of a representative bone node of the object ⌐ 401

↓

Perform two-dimensional key point extraction on the object in each video frame, to obtain two-dimensional key point information of the object in each video frame ⌐ 402

↓

Determine foot-ground-relation data of the object in each video frame based on the two-dimensional key point information ⌐ 403

↓

Construct a parameterized model of the object based on the first motion capture data, the parameterized model being configured to indicate bone node coordinates of each bone node of the object in a three-dimensional coordinate space ⌐ 404

↓

Acquire foot bone node coordinates of the object in each video frame based on the parameterized model ⌐ 405

↓

Determine a foot-to-ground penetration degree of the object in each video frame based on the foot bone node coordinates, and determine a foot penetration-related loss in each video frame according to the foot-to-ground penetration degree ⌐ 406

↓

Determine a foot sliding degree of the object in each video frame based on the foot bone node coordinates and the foot-ground-relation data, and determine a foot sliding-related loss of the object in the video according to the foot sliding degree ⌐ 407

↓

Determine a second vertical axis component of the global displacement data in the three-dimensional coordinate space based on the global displacement data and the parameterized model ⌐ 408

↓

Perform iterative optimization on the second vertical axis component based on the foot penetration-related loss ⌐ 409

↓

Perform iterative optimization on the global displacement data and the bone rotation data based on the foot penetration-related loss and the foot sliding-related loss, to obtain second motion capture data ⌐ 410

FIG. 4

Motion video 501

Transform encoder 502

Patch embedding layer

Transform encoding layer

Transform encoding layer

Decoder 503

Two-dimensional key point information 504

FIG. 5

Two-dimensional key point information 601

TCN model 602

Foot grounding data 603

FIG. 6

$[X_0, Z_0]$

Start

$[\Delta X_1, \Delta Z_1]$

$[\Delta X_2, \Delta Z_2]$

$[\Delta X_3, \Delta Z_3]$

$[\Delta X_{F-3}, \Delta Z_{F-3}]$

$[\Delta X_{F-2}, \Delta Z_{F-2}]$

$[\Delta X_{F-1}, \Delta Z_{F-1}]$

End

FIG. 7

Determine global displacement data, bone rotation data, and foot-ground-relation data — 801

Perform iterative optimization on a second vertical axis component of the global displacement data based on a first weighted loss — 802

Perform iterative optimization on the global displacement data and the bone rotation data based on a second weighted loss — 803

Obtain optimized global displacement data and optimized bone rotation data — 804

FIG. 8

FIG. 9

FIG. 10

First analysis module — 1001

Second analysis module — 1002

Loss determining module — 1003

Optimization module — 1004

FIG. 11

## INTERNATIONAL SEARCH REPORT

International application No.

**PCT/CN2024/076583**

### A. CLASSIFICATION OF SUBJECT MATTER

G06T13/40(2011.01)i

According to International Patent Classification (IPC) or to both national classification and IPC

### B. FIELDS SEARCHED

Minimum documentation searched (classification system followed by classification symbols)

G06T

Documentation searched other than minimum documentation to the extent that such documents are included in the fields searched

Electronic data base consulted during the international search (name of data base and, where practicable, search terms used)

CNABS, CNTXT, ENTXTC, ENTXT, VEN, CJFD, CNKI, WEB OF SCIENCE: 视频, 图像, 动作, 捕捉, 脚, 鞋, 触, 地, 穿帮, 穿模, 穿透, 滑步, 滑动, 损失, 优化, 校正, 修正, 骨骼, 位移, 旋转, video, image, capture, foot, shoes, ground, penetrate, slide, loss, optimize, correct, bone, displacement, motion, rotation

### C. DOCUMENTS CONSIDERED TO BE RELEVANT

| Category* | Citation of document, with indication, where appropriate, of the relevant passages | Relevant to claim No. |
|---|---|---|
| PX | CN 116051699 A (TENCENT TECHNOLOGY (SHENZHEN) CO., LTD.) 02 May 2023 (2023-05-02)<br>description, paragraphs 37-199 | 1-18 |
| A | CN 113033369 A (BEIJING DAJIA INTERNET INFORMATION TECHNOLOGY CO., LTD.) 25 June 2021 (2021-06-25)<br>entire document | 1-18 |
| A | CN 107067451 A (GUANGZHOU AIJIUYOU INFORMATION TECHNOLOGY CO., LTD.) 18 August 2017 (2017-08-18)<br>entire document | 1-18 |
| A | CN 110738717 A (NETEASE (HANGZHOU) NETWORK CO., LTD.) 31 January 2020 (2020-01-31)<br>entire document | 1-18 |
| A | CN 115601482 A (GUANGZHOU HUADUO NETWORK TECHNOLOGY CO., LTD.) 13 January 2023 (2023-01-13)<br>entire document | 1-18 |

☑ Further documents are listed in the continuation of Box C.  ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **21 March 2024** | **17 April 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

EP 4 579 599 A1

## INTERNATIONAL SEARCH REPORT

International application No.

**PCT/CN2024/076583**

### C. DOCUMENTS CONSIDERED TO BE RELEVANT

| Category* | Citation of document, with indication, where appropriate, of the relevant passages | Relevant to claim No. |
|---|---|---|
| A | US 2008136824 A1 (ELECTRONICS AND TELECOMMUNICATIONS RESEARCH INSTITUTE) 12 June 2008 (2008-06-12)<br>entire document | 1-18 |
| A | US 2022155871 A1 (KOREA ADVANCED INSTITUTE OF SCIENCE AND TECHNOLOGY) 19 May 2022 (2022-05-19)<br>entire document | 1-18 |

Form PCT/ISA/210 (second sheet) (July 2022)

28

**INTERNATIONAL SEARCH REPORT**
Information on patent family members

International application No.

**PCT/CN2024/076583**

| Patent document cited in search report | | | Publication date (day/month/year) | Patent family member(s) | | | Publication date (day/month/year) |
|---|---|---|---|---|---|---|---|
| CN | 116051699 | A | 02 May 2023 | CN | 116051699 | B | 02 June 2023 |
| | | | | HK | 40086438 | A0 | 25 August 2023 |
| | | | | HK | 40086438 | A1 | 06 October 2023 |
| CN | 113033369 | A | 25 June 2021 | CN | 113033369 | B | 12 March 2024 |
| CN | 107067451 | A | 18 August 2017 | CN | 107067451 | B | 13 July 2021 |
| CN | 110738717 | A | 31 January 2020 | CN | 110738717 | B | 11 May 2021 |
| CN | 115601482 | A | 13 January 2023 | | None | | |
| US | 2008136824 | A1 | 12 June 2008 | US | 7916143 | B2 | 29 March 2011 |
| | | | | KR | 20080052139 | A | 11 June 2008 |
| | | | | KR | 100867374 | B1 | 06 November 2008 |
| US | 2022155871 | A1 | 19 May 2022 | KR | 102254290 | B1 | 21 May 2021 |

Form PCT/ISA/210 (patent family annex) (July 2022)